# EUROPÄISCHE PATENTSCHRIFT

(11) **EP 2 516 047 B1**
(45) Veröffentlichungstag und Bekanntmachung des Hinweises auf die Patenterteilung: **07.10.2015**
(21) Anmeldenummer: 10795371.3
(22) Anmeldetag: 20.12.2010
(51) Int. Cl.: B01J 3/03, C01B 21/28, F16J 15/00

(54) **DICHTANORDNUNG FÜR EINEN PROZESSGASTURBOVERDICHTER**
SEALING ASSEMBLY FOR A PROCESS GAS TURBO-COMPRESSOR
ENSEMBLE D'ÉTANCHÉITÉ POUR UN TURBOCOMPRESSEUR DE GAZ DE PROCÉDÉ

(30) Priorität: 22.12.2009 EP 09180410
(43) Veröffentlichungstag der Anmeldung: 31.10.2012
(73) Patentinhaber: BASF SE, 67056 Ludwigshafen (DE)
(72) Erfinder: LENZ, Robert, 67433 Neustadt Gimmeldingen (DE); KRÜGER, Uwe, 67310 Hettenleidelheim (DE); KAOURIS, Gerasimos, 67157 Wachenheim (DE); LAUBSCHER, Thomas, 67454 Haßloch (DE); BENZ, Uwe, 67271 Kindenheim (DE)
(86) Internationale Anmeldenummer: PCT/EP2010/070182
(87) Internationale Veröffentlichungsnummer: WO 2011/076704

(56) Entgegenhaltungen:
- WO-A1-02/48583
- JP-A- 2 131 131

## Beschreibung

Die vorliegende Erfindung betrifft eine Dichtanordnung für einen Prozessgasturboverdichter, der beispielsweise bei der Salpetersäure-Herstellung zur Verdichtung hochkorrosiver Gase eingesetzt wird.

Die Herstellung von Salpetersäure mit einer Konzentration von 50 bis 76 % geschieht üblicherweise in Anlagen die nach dem Ostwald-Prozess arbeiten. Hierbei wird zwischen Anlagen, die nach dem Eindruck- bzw. Zweidruckverfahren arbeiten, unterschieden: bei Eindruckverfahren wird zunächst die Luft auf einen mittleren (ca. 5 bar) oder hohen Druck (ca. 12 bar) komprimiert, dann unter Druck befindliches Ammoniak hinzugemischt und die Mischung katalytisch verbrannt. Nach der Abkühlung wird das gebildete Stickoxid mit verdichteter Sekundärluft versehen und in wässriger Lösung absorbiert, wobei sich Salpetersäure bildet. Das restliche Gas wird gereinigt, entspannt und in die Atmosphäre gegeben.

Bei Zweidruckverfahren findet nach der katalytischen Verbrennung und der anschließenden Abkühlung eine weitere Verdichtung statt, um die Absorption bei einem höheren Druck als der Verbrennung betreiben zu können.

Sowohl die ein- oder mehrstufige Verdichtung des Einsatzgases, in der Regel Luft, als auch die Entspannung des Restgases werden üblicherweise mittels Turboverdichtern bzw. Turboexpandern durchgeführt, welche alle untereinander leistungsgekoppelt arbeiten.

Eine Dichtvorrichtung zur Abdichtung eines Gehäuses mit einem mindestens eine Nut aufweisenden, ersten Gehäuseteil und mit einem mindestens einen Steg aufweisende, zweiten Gehäuseteil und einem in die Nut eingefügten Dichtelement ist zum Beispiel aus WO-A 02/48583 bekannt.

An den Verdichtergehäusen der im Rahmen der Salpetersäure-Herstellung eingesetzten Prozessgasturboverdichter treten allgemein nach relativ kurzer Betriebszeit insbesondere an den Teilfugen, Gasundichtigkeiten auf, die durch neues Eindichten, beispielsweise durch Auftragung von Dichtmasse an den Teilfugen der Verdichter nur temporär behoben werden können. Diese Undichtigkeiten treten bedingt durch die hohe thermische Belastung der Verdichtergehäuse (Gehäuseeintrittstemperatur üblicherweise ca. 20 °C, Gehäuseaustrittstemperatur üblicherweise ca. 300 °C) auf. Diese hohe thermische Belastung führt an den Teilfugen der Verdichtergehäuse, also an den Stellen, an denen die Verdichtergehäuse Bauteile-dichtend verbunden sind, zu thermischen Verwerfungen, folglich zu Spaltvergrößerungen und Undichtigkeiten der Verdichterteilfuge.

Bei den bekannten Verdichterteilfugen kann somit mit zunehmender Standzeit vermehrt NO-haltiges Gas, so genanntes Schadgas, über die Teilfuge austreten.

Es ist daher die Aufgabe der vorliegenden Erfindung, eine Dichtanordnung, insbesondere für eine Verdichterteilfuge eines Prozessgasturboverdichters bei der Ammoniak-Herstellung zur Verfügung zu stellen, die möglichst dauerhaft gegen Leckage von NO-haltigem Gas nach außen gesichert ist.

Diese Aufgabe wird gelöst durch eine Dichtanordnung für einen mindestens zweiteiligen Behälter, bei dem die Dichtanordnung von einem im Behälterinneren unter Druck (Pi) stehenden Gas beaufschlagt wird, umfassend
eine erste Teilfuge, die mit einer zweiten Teiffuge in einen Dichtungskontakt bringbar ist, um den Austritt von Gas aus dem Behälterinnenraum zwischen den Teilfugen hindurch zu verhindern,
eine erste Dichtung in einer der Teilfugen in einer ersten Nut, die sich über die Länge der Teilfuge und quer zur Richtung einer möglichen Gasleckage zwischen den Teilfugen hinweg erstreckt,
eine zweite Dichtung in einer der Teilfugen in einer zweiten Nut, die sich über die Länge der Teilfuge und quer zur Richtung einer möglichen Gasleckage zwischen den Teilfugen hinweg erstreckt, und
eine zwischen der ersten und zweiten Nut angeordnete dritte Nut, die über eine oder mehrere Öffnung(en) mit einer Gaskomponente beaufschlagbar ist.

Gemäß einer bevorzugten Ausführungsform umfasst die Dichtanordnung ferner eine äußere Nut, die über eine oder mehrere Öffnungen auf einen gegenüber dem Umgebungsdruck verringerten Druck bringbar ist.

Überraschenderweise hat es sich im Rahmen von Betriebsversuchen herausgestellt, dass mittels der vorstehend beschriebenen Dichtanordnung der Austritt von Gas, insbesondere von NO-haltigem Schadgas aus einem Turboverdichter deutlich verringert bis gänzlich unterbunden werden kann. Ferner stellte sich heraus, dass mehrere Anfahrzyklen durchfahren werden können, ohne dass Undichtigkeiten an der Teilfuge zu beobachten waren.

Gemäß einer bevorzugten Ausführungsform der Erfindung sind die mindestens drei Nuten, die erste-, zweite-, dritte und, falls vorhanden, die Vierte Nut an der unteren Teilfuge angeordnet.

Dichtanordnungen für einen mindestens zweiteiligen Behälter, bei dem die Dichtanordnungen von einem im Behälterinneren unter Druck (Pi) stehenden Gas beaufschlagt sind, bedeutet im Sinne der Erfindung insbesondere eine Dichtanordnung, die zwei Gehäusebauteile eines Verdichtergehäuses über eine Teilfugenanordnung, dicht, d.h. ohne Gasleckagen oder mit geringer Gasleckage gegeneinander abdichtet. Hierdurch soll der Austritt von NO-haltigem Schadgas durch die Verdichterteilfugenanordnung, an der die Behälterbauteile aneinander anstoßen, verringert bzw. gänzlich verhindert werden.

Die Dichtanordnung umfasst eine erste Teilfuge und eine zweite Teilfuge, die in nicht näher dargestellter Weise mit einem unteren Teil bzw. einem oberen Teil eines Behälters, insbesondere eines Prozessgasturboverdichtergehäuses verbunden sind. Um den Gasaustritt aus dem unter Druck stehenden Behälterinneren durch die Teilfuge hindurch wirksam zu vermindern bzw. sogar gänzlich zu verhindern, ist eine der Teilfugen, bevorzugt die untere Teilfuge, zumindest mit einer ersten, einer zweiten und einer dritten Nut versehen. Diese mindestens drei Nuten erstrecken sich bevorzugt über die Länge der Teilfuge und quer zur Richtung einer möglichen Gasleckage zwischen den Teilfugen hinweg. Mit anderen Worten ausgedrückt erstrecken sich die Teilfugen entlang des äußeren Umfangs des Gehäuses, bevorzugt des Verdichtergehäuses.

Gemäß einer bevorzugten Ausführungsform sind die erste, die zweite und die dritte Nut parallel zueinander ausgerichtet.

Um den Austritt von Gas aus dem Behälterinneren zwischen den Teilfugen hindurch zu verhindern, sind in der ersten Nut und der zweiten Nut eine erste Dichtung und eine zweite Dichtung angeordnet. Die zwischen der ersten Nut und der zweiten Nut angeordnete dritte Nut ist über eine oder mehrere Öffnung(en) mit einer Gaskomponente beaufschlagbar. Wird über die zumindest eine Öffnung die dritte Nut mit einer Gaskomponente beaufschlagt, so bildet sich in der Dichtanordnung, im zusammengebauten Zustand, zwischen der ersten Dichtung und der zweiten Dichtung eine mit beiden Dichtungen in Verbindung und unter Druck stehende Sperrgaskammer aus.

Bei der Gaskomponente handelt es sich bevorzugt um ein Inertgas oder eine Mischung von Inertgasen, besonders bevorzugt handelt es sich bei der Gaskomponente um Stickstoff.

Gemäß einer bevorzugten Ausführungsform der Erfindung sind die erste, die zweite und die dritte Nut zum Behälterinneren hin angeordnet, d.h. sie befinden sich bezogen auf die Gesamtbreite der Teilfuge im inneren Drittel der Teilfuge.

Die erfindungsgemäße Dichtanordnung umfasst gemäß einer bevorzugten Ausführungsform ferner eine äußere Nut, die gegenüber der ersten, zweiten und dritten Nut zur Außenseite der Teilfuge, d.h. zum äußeren Rand der Teilfuge hin angeordnet ist. Diese äußere Nut ist über eine oder mehrere Öffnung(en) auf einen gegenüber dem Umgebungsdruck verringerten Druck bringbar. Sollte sich durch die vorstehend beschriebene Dichtungsanordnung dennoch eine Leckage ausbilden, so ermöglicht die äußere Nut eine Absaugung des austretenden Gases. Gemäß einer bevorzugten Ausführungsform der Erfindung ist die äußere Nut zum Behälteräußeren hin angeordnet, d.h. sie befindet sich bezogen auf die Gesamtbreite der Teilfuge im äußeren Drittel der Teilfuge.

Gemäß einer bevorzugten Ausführungsform der Erfindung umfassen die erste Dichtung und die zweite Dichtung ein Polytetrafluorethylen (PTFE). Gemäß einer besonders bevorzugten Ausführungsform der Erfindung sind die erste und die zweite Dichtung PTFE (Polytetrafluorethylen)-Dichtungen. Das heißt die erste und die zweite Dichtung sind aus Polytetrafluorethylen gefertigt.

Gemäß einer weiteren bevorzugten Ausführungsform der Erfindung sind die erste und die zweite Dichtung PTFE-Schnüre, die jeweils zu 100 % aus PTFE bestehen.

Gemäß einer Ausführungsform der Erfindung ist das Volumen der ersten bzw. zweiten Nut um 10 bis 30 %, bevorzugt um 15 bis 25 %, besonders bevorzugt um 20 % kleiner als das Volumen der ersten bzw. zweiten Dichtung. Das Volumen der Dichtungen ist somit höher als das Volumen der Nuten, wodurch im zusammengebauten Zustand ein Teil der Dichtung aus der Nut herausragt, und in vorhandene bzw. durch thermische Belastung entstehende Verwerfungen bzw. Spalte zwischen der ersten und der zweiten Teilfuge hineinragt, bei höheren Temperaturen sogar hineinfließen kann.

Gemäß einer Ausführungsform der Erfindung handelt es sich bei dem mindestens zweiteiligen Behälter um ein Gehäuse für einen Prozessgasverdichter, insbesondere um ein Gehäuse für einen Prozessgasturboverdichter, der bei der Herstellung von Salpetersäure eingesetzt wird. Die Teilfugen bzw. die Gehäusebauteile sind dabei bevorzugt aus Austenit gefertigt.

Die Dimensionierung der ersten, zweiten und dritten Nut kann über weite Bereiche variiert werden. Gemäß einer Ausführungsform der Erfindung haben die erste, zweite und dritte Nut unabhängig voneinander eine Breite im Bereich von 1,5 bis 8 mm, bevorzugt im Bereich von 3 bis 6 mm, besonders bevorzugt eine Breite von etwa 4 mm. Die Tiefe der ersten, zweiten und dritten Nut kann ebenfalls über weite Bereiche hinweg variieren und liegt allgemein im Bereich von 1,2 bis 7 mm, bevorzugt im Bereich von 2 bis 5,5 mm, besonders bevorzugt beträgt die Tiefe etwa 3 mm.

Die Dimensionierung der äußeren Nut kann ebenfalls über weite Bereiche hinweg variieren, sie hat üblicherweise eine Breite im Bereich von 6 bis 14 mm, bevorzugt im Bereich von 8 bis 12 mm und eine Tiefe im Bereich von 6 bis 20 mm, bevorzugt eine Tiefe im Bereich von 8 bis 16 mm.

Gemäß der Erfindung sind die erste und zweite Teilfuge in einen Dichtungskontakt bringbar, das bedeutet, dass die Teilfugen durch das Anziehen von Verbindungsmitteln, wie Schraubverbindungen bzw. Bolzen gegeneinander gepresst werden, wodurch sich im Zusammenspiel mit der ersten Dichtung und der zweiten Dichtung eine nahezu gasdichte Dichtanordnung ergibt.

Die Erfindung betrifft ferner ein Verfahren zur Herstellung einer dichten Dichtanordnung, insbesondere für einen Prozessgasturboverdichter, der bei der Herstellung von Salpetersäure eingesetzt wird, umfassend die Schritte:
(a) Bereitstellen einer wie vorstehend definierten Dichtanordnung,
(b) Verspannen von Verbindungsmitteln, insbesondere von Schraubverbindungen bzw. Bolzen, um die Teilfugen zusammenzupressen,
(c) Beaufschlagung der dritten Nut mit einer Gaskomponente auf einen Druck im Bereich von 2 bis 15 barg, bevorzugt auf einen Druck im Bereich von 2 bis 15 barg, besonders bevorzugt von etwa 10 barg, und
(d) Erhitzen der Dichtanordnung auf eine Temperatur im Bereich von 220 bis 350 °C, bevorzugt auf eine Temperatur im Bereich von 250 bis 300 °C.

In Verfahrensschritt (a) wird eine wie vorstehend beschriebene Dichtanordnung bereitgestellt. Dies bedeutet, dass ein wie vorstehend beschriebener mindestens zweiteiliger Behälter bereitgestellt wird, bei dem es sich bevorzugt um ein Verdichtergehäuse eines Verdichters, der bei der Salpetersäureherstellung eingesetzt wird handelt. Die mindestens zwei Teile des Behälters werden über mindestens eine Teilfuge, die eine erste Teilfuge und eine zweite Teilfuge umfasst, in einen Dichtungskontakt gebracht, um den Austritt von Gas aus dem Behälter zwischen den Teilfugen zu verhindern. Zwischen der ersten und der zweiten Teilfuge ist dabei eine erste Dichtung in einer der Teilfugen in einer erste Nut, die sich über die Länge der Teilfuge und quer zur Richtung einer möglichen Gasleckage zwischen den Teilfugen hinweg erstreckt, angeordnet, ferner ist eine zweite Dichtung in einer der Teilfugen in einer zweiten Nut, die sich über die Länge der Teilfuge und quer zur Richtung einer möglichen Gasleckage zwischen den Teilfugen hin erstreckt, angeordnet. Darüber hinaus ist zwischen der ersten und der zweiten Nut eine dritte Nut angeordnet, die über eine oder mehrere Öffnung(en) mit einer Gaskomponente beaufschlagbar ist.

In Verfahrensschritt (b) werden nach dem Bereitstellen der Dichtanordnung die erste und die zweite Teilfuge miteinander verspannt bzw. zusammengepresst, um eine möglichst dichte Teilfuge zu erhalten. Das Verspannen geschieht dabei bevorzugt durch Anziehen von Verbindungsmitteln wie Schaubverbindungen bzw. Bolzen.

In dem daran anschließenden Verfahrensschritt (c) wird die dritte Nut, die sich zwischen der ersten und der zweiten Nut befindet, mit einer Gaskomponente auf einen Druck im Bereich von 2 bis 15 barg beaufschlagt, d.h. es wird in dem Bereich zwischen der ersten und der zweiten Dichtung ein Druck angelegt. Bei der Gaskomponente handelt es sich gemäß einer bevorzugten Ausführungsform der Erfindung um Stickstoff.

Im nun anschließenden Verfahrensschritt (d) wird die Dichtanordnung auf eine Temperatur im Bereich von 220 bis 350 °C erhitzt. Das Erhitzen geschieht dabei üblicherweise durch das Anfahren des Turboverdichters, es kann jedoch auch durch Einleiten von Heißgasen vorgenommen werden. Während des Erhitzens der Dichtanordnung, bevorzugt während des Anfahrens des Verdichters, sind die Bauteile des mindestens zweiteiligen Behälters einer hohen thermischen Belastung unterworfen, wodurch es insbesondere im Bereich der Teilfuge zu thermischen Verwerfungen des Teilfugenmaterials kommt, in Folge dessen Leckagen in der Teilfuge entstehen können. Vorteilhafterweise führt der in dem Zwischenraum zwischen der ersten und der zweiten Dichtung angelegte Druck und die Temperaturerhöhung zu einem Fließen der Dichtung(en) in während des Hochfahrens entstehende Verwerfungen, wodurch sich beim Anfahren des Verdichters eine dichte Dichtungsanordnung ergibt. Insbesondere bei der Verwendung von PTFE-Dichtungen wurde ein Fließen der Dichtung bei Temperaturen > 200 °C beobachtet, welches zum dichten Verschluss von neu auftretenden Verwerfungen zwischen den Teilfugen führte. Vorteilhafterweise wird hierdurch ein sehr dynamisches Verfahren zur Abdichtung eines mindestens zweiteiligen Behälters zur Verfügung gestellt.

Es hat sich als besonders vorteilhaft herausgestellt, eine Dichtanordnung bereitzustellen, bei der die erste und die zweite Dichtung PTFE-Dichtungen sind, deren Volumen um 10 bis 30 % größer als das Volumen der ersten bzw. zweiten Nut sind. Hierdurch wird in besonders vorteilhafter Weise sichergestellt, dass das Material der PTFE-Dichtungen in Verfahrensschritt (d), d.h. während dem Erhitzen der Dichtanordnung bzw. dem Anfahren des Turboverdichters in neu entstehende Verwerfungen zwischen der ersten und der zweiten Teilfuge einfließen kann. Dieses Einfließen wird insbesondere über den Überdruck, der zwischen den beiden Dichtungen herrscht, ermöglicht. Dabei wird insbesondere das Kriechverhalten von PTFE bei hoher Temperatur zur Herstellung einer dichten Verbindung genutzt.

Gemäß einer bevorzugten Ausführungsform der Erfindung wird in einem Verfahrensschritt (e) an einer äußeren, vierten Nut ein Unterdruck im Bereich von -0,04 bis -0,05 bar angelegt, um mögliche austretende Gase abzusaugen. Gemäß einer bevorzugten Ausführungsform der Erfindung ist die mindestens eine Öffnung, die mit der äußeren Nut verbunden ist, saugseitig mit einem NO-Niederdruckverdichter verbunden, über den der Unterdruck angelegt wird.

Die nachfolgenden Beispiele und Figuren veranschaulichen die Erfindung.

Es zeigen:
- Figur 1: eine Aufsicht auf eine Teilfuge 2,
- Figur 2: eine Aufsicht auf eine Teilfuge 2,
- Figur 3: eine schematische Darstellung einer erfindungsgemäßen Dichtanordnung;

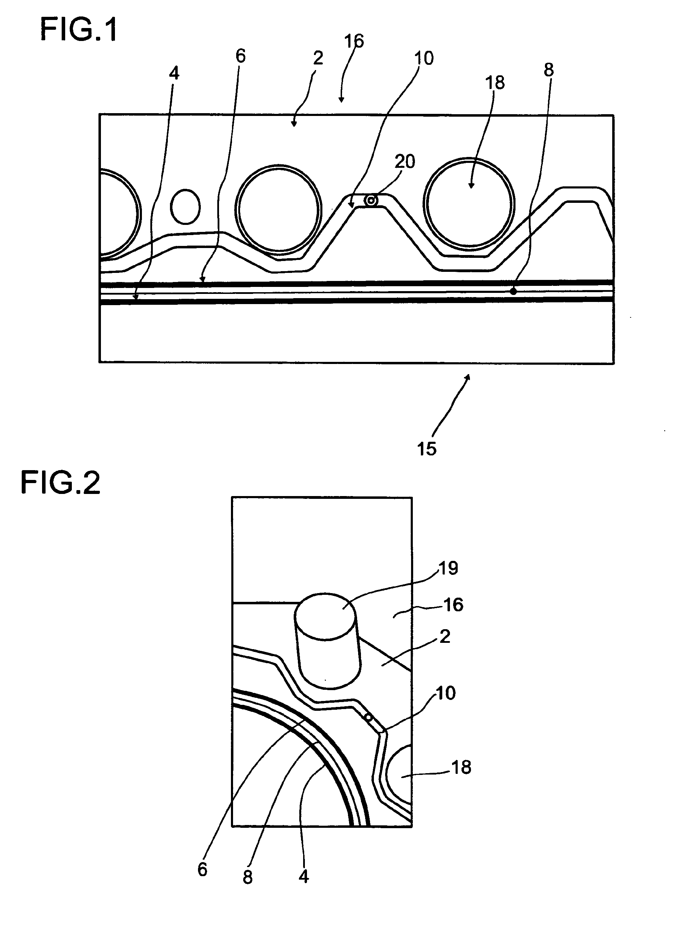

Figuren 1 und 2 zeigen Aufsichten auf eine Teilfuge 2 eines Gehäuseunterteils 11 eines Prozessgasturboverdichters. Zu sehen sind die erste Dichtung 4 und zweite Dichtung 6, zwischen denen die mit Stickstoff beaufschlagbare dritte Nut 8 angeordnet ist. Ferner dargestellt ist die äußere Nut 10, über die möglicherweise austretendes NO-haltiges Schadgas über eine Öffnung 20 abgesaugt werden kann. Weiterhin zu sehen sind Öffnungen zur Aufnahme von Verbindungselementen 18, beispielsweise von Bolzen 19.

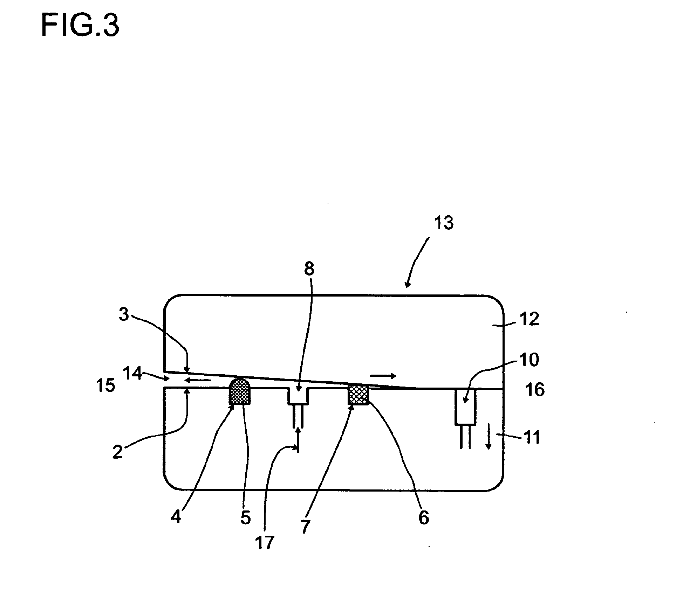

Figur 3 zeigt eine schematische Darstellung der erfindungsgemäßen Dichtanordnung. Die Dichtanordnung befindet sich zwischen einem Gehäuseunterteil 11 und einem Gehäuseoberteil 12 eines Prozessgasturboverdichters 13, der beispielsweise bei der Herstellung von Salpetersäure eingesetzt wird. Gezeigt ist die Dichtungsanordnung mit einer ersten Teilfuge 2 und einer zweiten Teilfuge 3. Zwischen den beiden Teilfugen 3, 2 befindet sich eine Spaltöffnung 14, durch die während des Betriebs des Prozessgasturboverdichters NO-haltiges Prozessgas von der Prozessgasseite 15 zur Atmosphäre 16 strömen könnte. Um dies zu verhindern, werden in der ersten Nut 5 und der zweite Nut 7 eine erste bzw. zweite Dichtung 4, 6 angeordnet, und der Zwischenraum zwischen diesen Dichtungen 4, 6 über eine dritte Nut 8 mit Stickstoff 17 mit einem Druck von etwa 10 barg beaufschlagt. Wie in der Schemadarstellung in Figur 3 gezeigt, bewirkt der Stickstoffüberdruck in dem Zwischenraum zwischen der ersten Dichtung 4 und der zweiten Dichtung 6, dass das aus der ersten Nut 7 herausragende Dichtungsmaterial der zweiten Dichtung 6 in bestehende bzw. entstehende Verwerfungen einfließt und somit eine Abdichtung der Verdichterteilfuge bewirkt. Das aus der ersten Nut 5 herausragende Dichtungsmaterial der ersten Dichtung 4 dient dabei der Herstellung eines möglichst geschlossenen Raumes zwischen der ersten Dichtung 4 und der zweiten Dichtung 6. Die Spaltöffnung 14 ist - wie in Figur 3 gezeigt - erwartungsgemäß zur Prozessgasseite 15 hin geöffnet, da die Bolzen (nicht dargestellt), welche zur Verbindung der Teilfugen 2, 3 dienen, üblicherweise hin zur Atmosphärenseite angeordnet sind.

Ferner dargestellt ist in Figur 3 die äußere Nut 10, die die Absaugung möglicher durch die zweite Dichtung 6 tretender Gase ermöglicht. Das Zusammenspiel des einströmenden Stickstoffs mit der Temperatur, die gerade beim Anfahren des Verdichters von etwa 20 °C auf bis zu 300 °C ansteigt, führt zu einem dynamischen Verschließen bestehender bzw. entstehender Leckagen bzw. Verwerfungen durch das Einfließen des Materials der zweiten Dichtung 6 in diese.

### Bezugszeichenliste

- 1: Behälter
- 2: Teilfuge (Unterteil)
- 3: Teilfuge (Oberteil)
- 4: erste Dichtung
- 5: erste Nut
- 6: zweite Dichtung
- 7: zweite Nut
- 8: dritte Nut
- 9: Öffnung für Stickstoff
- 10: äußere Nut
- 11: Gehäuseunterteil
- 12: Gehäuseoberteil
- 13: Prozessgasturboverdichter
- 14: Spaltöffnung
- 15: Prozessgasseite
- 16: Atmosphärenseite
- 17: Stickstoff, 10 barg
- 18: Schraubenloch
- 19: Bolzen / Verbindungsschraube
- 20: Öffnung zur Absaugung in äußerer Nut

## Patentansprüche

1. Dichtanordnung für einen mindestens zweiteiligen Behälter (1), bei dem die Dichtanordnung von einem im Behälterinneren unter Druck (Pi) stehenden Gas beaufschlagt wird, umfassend eine erste Teilfuge (2), die mit einer zweiten Teilfuge (3) in einen Dichtungskontakt bringbar ist, um den Austritt von Gas aus dem Behälter (1) zwischen den Teilfugen zu verhindern,
eine erste Dichtung (4) in einer der Teilfugen (2,3) in einer ersten Nut (5), die sich über die Länge der Teilfuge und quer zur Richtung einer möglichen Gasleckage zwischen den Teilfugen (2,3) hinweg erstreckt,
eine zweite Dichtung (6) in einer der Teilfugen (2,3) in einer zweiten Nut (7), die sich über die Länge der Teilfuge und quer zur Richtung einer möglichen Gasleckage zwischen den Teilfugen (2,3) hinweg erstreckt, und
eine zwischen den Nuten (5,7) angeordnete dritte Nut (8), die über eine oder mehrere Öffnung(en) (9) mit einer Gaskomponente beaufschlagbar ist.

2. Dichtanordnung nach Anspruch 1, ferner umfassend eine äußere Nut (10), die über eine oder mehrere Öffnung(en) auf einen gegenüber dem Umgebungsdruck verringerten Druck bringbar ist

3. Dichtanordnung nach Anspruch 1 oder 2, wobei die erste und die zweite Dichtung (4,6) PTFE-Dichtungen sind.

4. Dichtanordnung nach einem der Ansprüche 1 bis 3, wobei das Volumen der ersten bzw. zweiten Nut (5,7) um 10 bis 30 % kleiner als das Volumen der ersten bzw. zweiten Dichtung (4,6) ist.

5. Dichtanordnung nach einem der Ansprüche 1 bis 4, wobei der eine mindestens zweiteilige Behälter (1) ein Gehäuse für einen Prozessgasturboverdichter ist.

6. Dichtanordnung nach einem der Ansprüche 1 bis 5, wobei die erste und die zweite Dichtung (4,6) PTFE-Schnüre sind.

7. Dichtanordnung nach einem der Ansprüche 1 bis 6, wobei die erste, zweite und dritte Nut (5,7,8) unabhängig voneinander eine Breite im Bereich von 1,5 bis 8 mm und eine Tiefe im Bereich von 1,2 bis 7 mm haben.

8. Dichtanordnung nach einem der Ansprüche 2 bis 7, wobei die äußere Nut (10) eine Breite im Bereich von 6 bis 14 mm und eine Tiefe im Bereich von 6 bis 20 mm hat.

9. Dichtanordnung nach einem der Ansprüche 1 bis 8, wobei die Teilfugen (2,3) über wenigstens eine Schraubverbindung dichtend zusammenpressbar sind.

10. Dichtanordnung nach einem der Ansprüche 1 bis 9, wobei die Teilfugen aus Austenit sind.

11. Verfahren zur Herstellung einer dichten Dichtanordnung umfassend die Schritte:
(a) Bereitstellen einer Dichtanordnung, wie in einem der Ansprüche 1 bis 10 definiert.
(b) Verspannen von Schraubverbindungen um die Teilfugen zusammenzupressen,
(c) Beaufschlagung der dritten Nut mit einer Gaskomponente auf einen Druck im Bereich von 2 bis 15 barg, und
(d) Erhitzen der Dichtanordnung auf eine Temperatur im Bereich von 220 bis 350 °C.

12. Verfahren nach Anspruch 11, wobei die dritte Nut in Verfahrensschritt (c) mit Stickstoff beaufschlagt wird.

13. Verfahren nach Anspruch 11 oder 12, wobei in einem Verfahrensschritt (e) in der äußeren Nut ein Unterdruck im Bereich von -0,04 bis -0,05 bar angelegt wird.

14. Verfahren nach Anspruch 11, 12 oder 13, wobei die Dichtanordnung gemäß Anspruch 5 während des Anfahrens des Prozessgasturboverdichters erhitzt wird.

## Claims

1. A sealing arrangement for an at least two-part vessel (1), in which the sealing arrangement is exposed to a gas pressurized (Pi) in the interior of the vessel, comprising a first parting surface (2) which may be brought into sealing contact with a second parting surface (3) in order to prevent gas from escaping out of the vessel (1) between the parting surfaces,
a first seal (4) in one of the parting surfaces (2, 3) in a first channel (5), which extends over the length of the parting surface and transversely to the direction of any gas leak out between the parting surfaces (2, 3),
a second seal (6) in one of the parting surfaces (2, 3) in a second channel (7), which extends over the length of the parting surface and transversely to the direction of any gas leak out between the parting surfaces (2, 3), and
a third channel (8) arranged between the first and second channels (5, 7), which may be supplied with a gas component via one or more opening(s) (9).

2. The sealing arrangement according to claim 1, further comprising an outer channel (10), which may be brought to a reduced pressure relative to ambient pressure by way of one or more opening(s).

3. The sealing arrangement according to claim 1 or 2, wherein the first and second seals (4, 6) are PTFE seals.

4. The sealing arrangement according to one of claims 1 to 3, wherein the volume of the first or second channel (5, 7) is 10 to 30 % smaller than the volume of the first or second seal (4, 6).

5. The sealing arrangement according to one of claims 1 to 4, wherein the at least two-part vessel (1) is a housing for a process gas turbo-compressor.

6. The sealing arrangement according to one of claims 1 to 5, wherein the first and second seals (4, 6) are PTFE cords.

7. The sealing arrangement according to one of claims 1 to 6, wherein the first, second and third channels (5, 7, 8) mutually independently have a width in the range from 1.5 to 8 mm and a depth in the range from 1.2 to 7 mm.

8. The sealing arrangement according to one of claims 2 to 7, wherein the outer channel (10) has a width in the range from 6 to 14 mm and a depth in the range from 6 to 20 mm.

9. The sealing arrangement according to one of claims 1 to 8, wherein the parting surfaces (2, 3) may be pressed together in a sealing manner by way of at least one screw fastening.

10. The sealing arrangement according to one of claims 1 to 9, wherein the parting surfaces are made from austenite.

11. A method of producing a tight sealing arrangement comprising the steps:
(a) providing a sealing arrangement as defined in one of claims 1 to 10,
(b) tightening screw fastenings to press the parting surfaces together,
(c) supplying the third channel with a gas component at a pressure in the range from 2 to 15 barg, and
(d) heating the sealing arrangement to a temperature in the range from 220 to 350 °C.

12. The method according to claim 11, wherein the third channel is supplied with nitrogen in method step (c .

13. The method according to claim 11 or 12, wherein in a method step (e) a reduced pressure in the range from -0.04 to -0.05 bar is applied to the outer channel.

14. The method according to claim 11, 12 or 13, wherein the sealing arrangement according to claim 5 is heated during start-up of the process gas turbo-Compressor.

## Revendications

1. Agencement d'étanchéité pour un contenant (1) au moins à deux parties, l'agencement d'étanchéité étant mis sous pression par un gaz à une pression (Pi) à l'intérieur du contenant, comprenant un premier joint partiel (2), qui peut être mis en contact d'étanchéité avec un second joint partiel (3) pour empêcher la sortie de gaz du contenant (1) entre les joints partiels,
une première garniture (4) dans un des joints partiels (2, 3) dans une première rainure (5) qui s'étend sur la longueur du joint partiel et perpendiculairement à la direction d'une fuite de gaz possible entre les joints partiels (2, 3),
une deuxième garniture (6) dans un des joints partiels (2, 3) dans une deuxième rainure (7) qui s'étend sur la longueur du joint partiel et perpendiculairement à la direction d'une fuite de gaz possible entre les joints partiels (2, 3), et
une troisième rainure (8) agencée entre les rainures (5, 7), qui peut être mise sous pression par un composant gazeux par une ou plusieurs ouvertures (9).

2. Agencement d'étanchéité selon la revendication 1, comprenant en outre une rainure extérieure (10), qui peut être mise à une pression réduite par rapport à la pression ambiante par une ou plusieurs ouvertures.

3. Agencement d'étanchéité selon la revendication 1 ou 2, dans lequel la première et la deuxième garniture (4, 6) sont des garnitures en PTFE.

4. Agencement d'étanchéité selon l'une quelconque des revendications 1 à 3, dans lequel le volume de la première ou de la deuxième rainure (5, 7) est 10 à 30 % inférieur au volume de la première ou de la deuxième garniture (4, 6).

5. Agencement d'étanchéité selon l'une quelconque des revendications 1 à 4, dans lequel ledit contenant (1) au moins à deux parties est un contenant pour un turbocompresseur de gaz de procédé.

6. Agencement d'étanchéité selon l'une quelconque des revendications 1 à 5, dans lequel la première et la deuxième garniture (4, 6) sont des cordons en PTFE.

7. Agencement d'étanchéité selon l'une quelconque des revendications 1 à 6, dans lequel la première, la deuxième et la troisième rainure (5, 7, 8) ont indépendamment les unes des autres une largeur dans la plage allant de 1,5 à 8 mm et une profondeur dans la plage allant de 1,2 à 7 mm.

8. Agencement d'étanchéité selon l'une quelconque des revendications 2 à 7, dans lequel la rainure extérieure (10) a une largeur dans la plage allant de 6 à 14 mm et une profondeur dans la plage allant de 6 à 20 mm.

9. Agencement d'étanchéité selon l'une quelconque des revendications 1 à 8, dans lequel les joints partiels (2, 3) peuvent être comprimés l'un avec l'autre de manière étanche par au moins une liaison à vis.

10. Agencement d'étanchéité selon l'une quelconque des revendications 1 à 9, dans lequel les joints partiels sont en austénite.

11. Procédé de fabrication d'un agencement d'étanchéité étanche, comprenant les étapes suivantes :
(a) la préparation d'un agencement d'étanchéité tel que défini dans l'une quelconque des revendications 1 à 10,
(b) le serrage de liaisons à vis pour comprimer les joints partiels l'un avec l'autre,
(c) la mise sous pression de la troisième rainure avec un composant gazeux à une pression dans la plage allant de 2 à 15 barg et
(d) le chauffage de l'agencement d'étanchéité à une température dans la plage allant de 220 à 350 °C.

12. Procédé selon la revendication 11, dans lequel la troisième rainure est mise sous pression avec de l'azote lors de l'étape de procédé (c).

13. Procédé selon la revendication 11 ou 12, dans lequel une sous-pression dans la plage allant de -0,04 à -0,05 bar est appliquée à la rainure extérieure lors d'une étape de procédé (e).

14. Procédé selon la revendication 11, 12 ou 13, dans lequel l'agencement d'étanchéité selon la revendication 5 est chauffé pendant le démarrage du turbocompresseur de gaz de procédé.
